# EUROPEAN PATENT SPECIFICATION

(11) **EP 3 411 694 B1**
(45) Date of publication and mention of the grant of the patent: **04.03.2026**
(21) Application number: 17747984.7
(22) Date of filing: 30.01.2017
(51) Int. Cl.: G01N 21/95, G01N 21/88, G01N 21/47, G02B 17/08

(54) **WAFER DEFECT INSPECTION AND REVIEW SYSTEMS**
WAFER-DEFEKTINSPEKTIONS- UND PRÜFSYSTEME
SYSTÈMES DE VÉRIFICATION ET D'INSPECTION DE DÉFAUT DE PLAQUETTE

(30) Priority: 03.02.2016 US 201662290586 P; 28.09.2016 US 201615279053
(43) Date of publication of application: 12.12.2018
(73) Proprietor: Kla-Tencor Corporation, Milpitas, California 95035 (US)
(72) Inventor: ZHANG, Shiyu, Fremont, California 94539 (US)
(74) Representative: FRKelly
(86) International application number: PCT/US2017/015660
(87) International publication number: WO 2017/136286

(56) References cited:
- WO-A1-2009/046137
- US-A- 5 071 240
- US-A1- 2004 125 352
- US-A1- 2006 198 018
- US-A1- 2006 219 930
- US-A1- 2008 117 532
- US-A1- 2009 080 068
- US-A1- 2011 085 179
- US-A1- 2014 264 051
- US-B2- 6 626 542
- US-B2- 6 894 834
- US-B2- 7 177 099
- US-B2- 7 466 489
- US-B2- 7 633 675

## Description

### CROSS-REFERENCE TO RELATED APPLICATIONS

### TECHNICAL FIELD

The disclosure generally relates to the field of inspection, and particularly to inspection of semiconductor devices.

### BACKGROUND

Thin polished plates such as silicon wafers and the like are a very important part of modern technology. A wafer, for instance, may refer to a thin slice of semiconductor material used in the fabrication of integrated circuits and other devices. Other examples of thin polished plates may include magnetic disc substrates, gauge blocks and the like. While the technique described here refers mainly to wafers, it is to be understood that the technique also is applicable to other types of polished plates as well. The term wafer and the term thin polished plate may be used interchangeably in the present disclosure.

Wafers are subjects to defect inspections. Tools utilized to perform such inspections are expected to be efficient and effective. It is noted, however, that recent developments in large scale circuit integration and size reduction have challenged that expectation. That is, existing inspection tools are becoming less efficient and effective in detecting defects as that defects are becoming increasingly smaller.

US2006/219930 discloses all-reflective optical systems for broadband wafer inspection.

US2011 /085179 describes an apparatus for microlithographic projection exposure and apparatus for inspecting a surface of a substrate.

US2009/080068 discloses a projection optical system, exposure apparatus, and method of manufacturing device.

US7633675 describes a catadioptric imaging system employing immersion liquid for use in broad band microscopy.

Therein lies a need for improved inspection systems without the aforementioned shortcomings.

### SUMMARY

The present disclosure is directed to an imaging objective as recited in claim 1.

A further embodiment of the present disclosure is directed to an inspection system as recited in claim 5.

The imaging objective according to the claimed invention includes a front objective configured to produce a diffraction limited intermediate image. The imaging objective also includes a relay configured to receive the intermediate image produced by the front objective. The relay includes three spherical mirrors positioned to deliver a projection of the intermediate image to a fixed image plane. The three spherical mirrors may be all reflective mirrors with substantially no obscuration, and are, according to the claimed invention, configured to have different curvatures with respect to each other.

It is to be understood that both the foregoing general description and the following detailed description are exemplary and explanatory only and are not necessarily restrictive of the present disclosure. The accompanying drawings, which are incorporated in and constitute a part of the specification, illustrate subject matter of the disclosure. Together, the descriptions and the drawings serve to explain the principles of the disclosure.

### BRIEF DESCRIPTION OF THE DRAWINGS

The numerous advantages of the disclosure may be better understood by those skilled in the art by reference to the accompanying figures in which:
FIG. 1 is a block diagram depicting an inspection system configured in accordance with an embodiment of the present disclosure;
FIG. 2 is an illustration depicting an optical layout of an exemplary imaging objective configured in accordance with an embodiment of the present disclosure;
FIG. 3 is an illustration depicting a portion of the optical layout shown in FIG. 2;
FIG. 4 is an illustration depicting another portion of the optical layout shown in FIG. 2; and
FIG. 5 is an illustration depicting an optical layout showing the overlay of multiple zoom configurations for various magnifications of the optical layout shown in FIG. 2.

### DETAILED DESCRIPTION

Reference will now be made in detail to the subject matter disclosed, which is illustrated in the accompanying drawings.

Embodiments in accordance with the present disclosure are directed to imaging objectives and inspection systems equipped with such imaging objectives. An imaging objective configured in accordance with the present disclosure may feature a perfect (e.g., diffraction limited) or imperfect intermediate image and a three-mirror all reflective relay. An imaging objective configured in this manner may serve as an alternative to the imaging objective described in U.S. Patent No. 6,894,834. It is noted that the imaging objective described in U.S. Patent No. 6,894,834 does not provide diffraction limited performance at an intermediate image plane, making it impossible to be used for confocal applications. It is contemplated that imaging objectives configured in accordance with embodiments of the present disclosure may be utilized as a baseline design for future broadband imaging objectives.

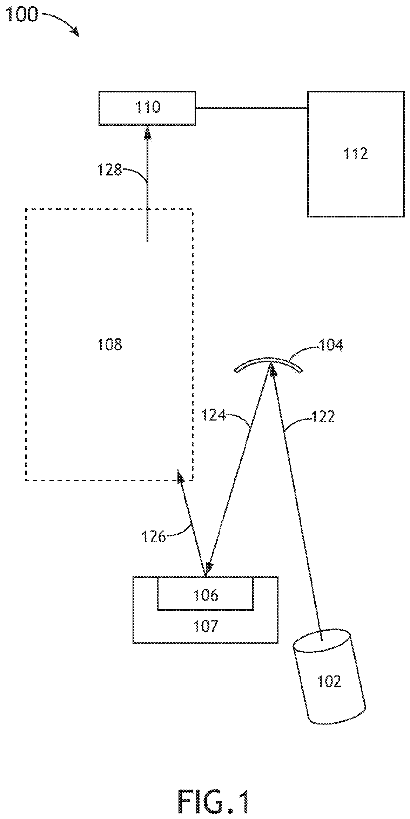

Referring generally to FIG. 1, a block diagram depicting an inspection system 100 configured in accordance with an embodiment of the present disclosure is shown. The inspection system 100 may include an illumination source 102, an illumination mirror (or a lens system) 104, a target substrate 106, a substrate holder 107, and a data processor 112, and includes according to the claimed invention an imaging objective (108) and a sensor (detector 108).

The illumination source 102 may include, for example, a laser-induced plasma source, which can output a light beam 122. The illumination mirror 104 may reflect and direct the light beam 122 such that an incident beam 124 may be provided toward the target substrate 106. The target substrate 106 (e.g., a wafer) may then be scanned under the beam 124 by controllably translating the substrate holder 107 so that the field of view (FOV) of the inspection system 100 can cover regions on the substrate to be inspected. Consequently, output light 126 may be reflected from the target substrate 106 to the imaging objective 108, which may then output a projection 128 of the output light onto the sensor 110.

The sensor 110 may include one or more charged coupled devices (CCD), CCD arrays, time delay integration (TDI) sensors, TDI sensor arrays, photomultiplier tubes (PMT), as well as various other types of optical sensing devices. The signals captured by the sensor 110 may be provided to the data processor 112 for additional processing. In some embodiment, the data processor 112 may be configured to analyze intensity, phase, and/or other characteristics of the sensed light beam. The data processor 112 may also be configured to provide the analysis results to one or more systems or users.

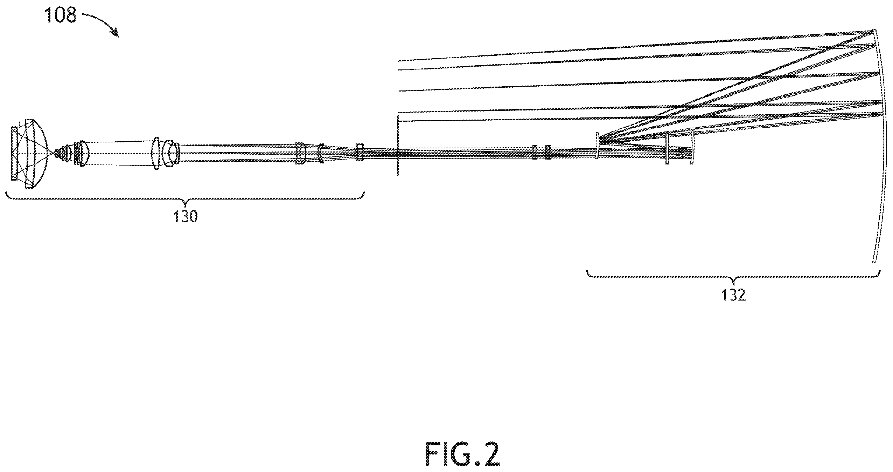

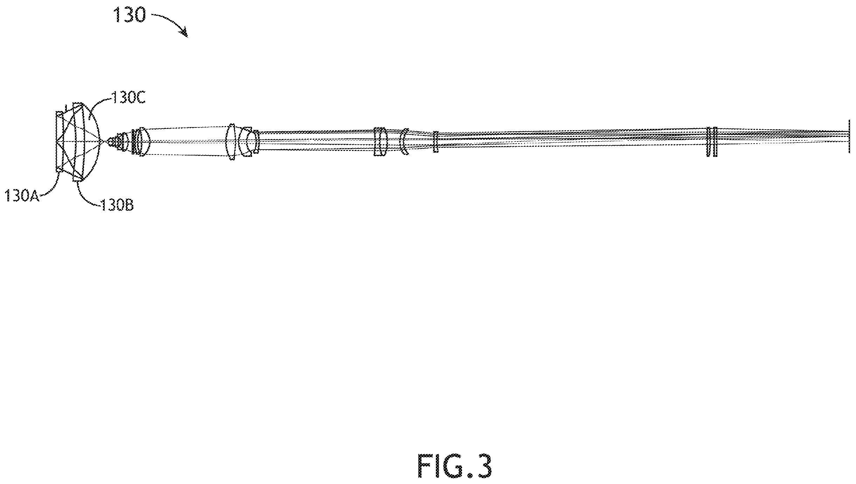

Referring now to FIGS. 2-4, illustrations depicting an exemplary implementation of an imaging objective 108 configured in accordance with the present disclosure are shown. The imaging objective 108 includes, according to the claimed invention, a front objective 130 and a relay (which can also act as a zoom optics, and may therefore be referred to as a zoom relay) 132. According to the claimed invention, the front objective 130 is placed before the intermediate image as shown in FIG. 3 and has an objective head that includes: (1) a plano-convex lens 130A with the plano side also serving as reflecting surface, (2) a meniscus lens 130B, and (3) a concave mirror 130C, as well as a series of refractive fused silica and calcium fluoride lenses.

It is contemplated that, according to examples not being covered by the claimed invention, the front objective 130 may be configured differently from the configuration depicted in FIGS. 2-4. It is contemplated that while specific implementations of the front objective 130 may vary, it may still be adjusted (optimized) to provide diffraction limited performance (e.g., having a Strehl ratio of 0.9 or better, and in some embodiments, having a Strehl ratio of 0.5 or better) at the intermediate image. The intermediate image may then be magnified by a reasonably large value, e.g., 50X, such that the numerical aperture (NA) at the intermediate image plane is reduced to a relatively small value, e.g., 0.2 or less. It is contemplated that the smaller NA makes it possible to achieve diffraction limited performance by optimizing the performance at the intermediate image. The smaller NA at the interface, which is the intermediate image plane, also makes the coupling of the front objective 130 and the zoom relay 132 relatively easy, so that the front objective 130 and the zoom relay 132 can be designed independently, while the interface at the intermediate image can be telecentric. Furthermore, it is noted that because the NA at the interface is small, the alignment tolerance of the zoom relay 132 and the front objective 130 is relatively loose, which may in turn allow the imaging objective 108 to be designed and manufactured in cost-effective manner.

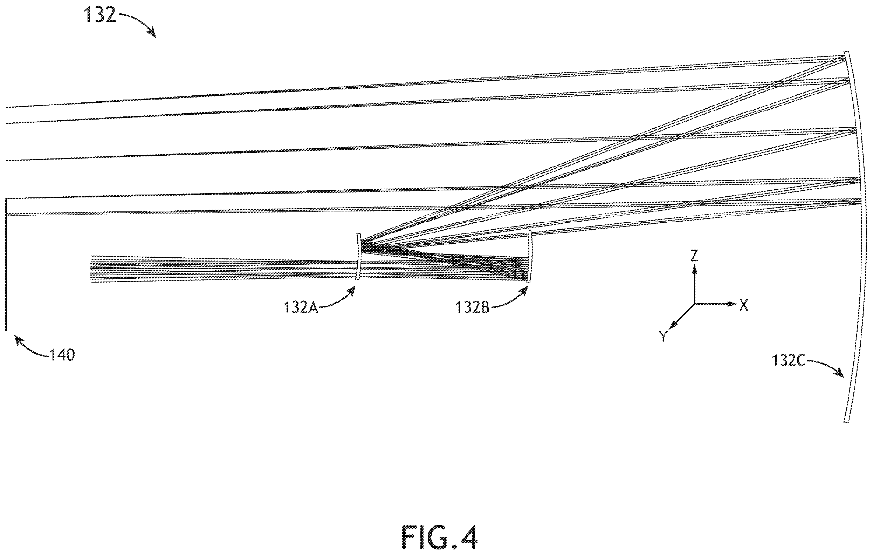

In some embodiments, it may be preferable to have the intermediate image being telecentric so that the aberration introduced by the zoom relay 132 can be minimized. In cases where the intermediate image cannot be telecentric, proper matching of pupil locations may be considered so that the aberration introduced by the zoom relay 132 can be optimized. FIG. 4 is a depiction illustrating an exemplary zoom relay 132 in detail.

As shown in FIG. 4, the zoom relay 132 includes three (partial) spherical mirrors 132A, 132B, and 132C, which can all move axially and vertically (e.g., in the Y and Z direction) to maintain a fixed image plane 140. It is noted that maintaining a fixed image plane 140 allows the sensor 110 to remain at a fixed location, which may be appreciated for various reasons. It is also noted that in some embodiments, the mirrors 132A, 132B, and 132C of the zoom relay 132 may be all reflective with no-obscuration. It is noted that obscuration is eliminated because obscuration can reduce the low to mid frequency signal response.

According to the claimed invention, the mirrors 132A, 132B, and 132C of the zoom relay 132 are configured with different curvatures. It is noted that by configuring the zoom relay 132 in this manner, a conjugate image plane relative to the intermediate image is created in the image path. If the field stop is placed at the conjugate image plane in the illumination path, which is automatically corrected for the aberrations, there is no need to optimize for the illumination from the field stop to the wafer conjugate. In other words, the illumination path design is now automatically completed.

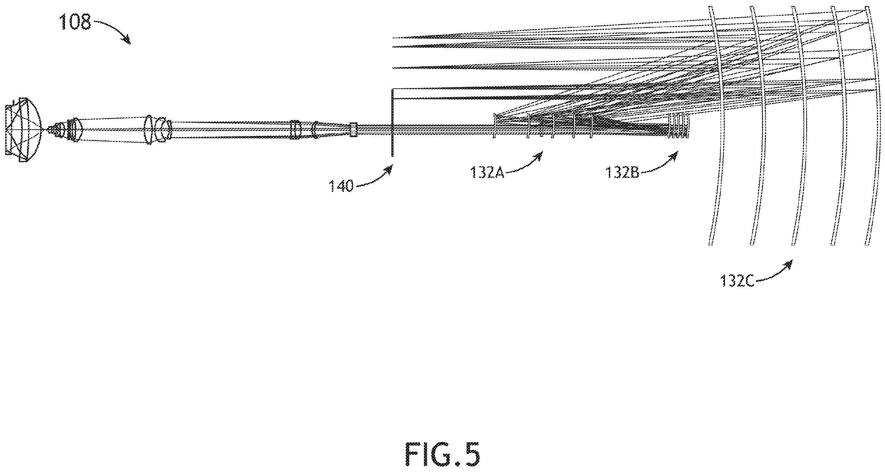

In some embodiments, the relay is designed to cover a 2X zoom range. If a large zoom range is desired, the zoom range may be divided into multiple sub-zoom assemblies with each sub-zoom assembly implementing a three-mirror zoom relay 132 with aberration corrected within that sub-zoom range. These zoom assemblies 132 may be configured to be switchable and can be utilized together to achieve a larger zoom range. It is noted that since the NA for the relay is relatively small (as previously described), the zoom assembly's tilt and placement tolerance can be relatively loose, which makes the replaceable zoom feasible. FIG. 5 is an illustration depicting multiple sub-zoom assemblies overlaid as described herein. It is noted that the mirror relay configured in this manner will enable automatic correction of the chromatic aberrations because of the all reflective design.

As will be appreciated from the above, imaging objectives configured in accordance with the present disclosure can provide perfect (diffraction limited) intermediate images, making it possible to provide implementations for confocal applications. Being diffraction limited also means that the margin assigned to aberration can be reduced accordingly, allowing inspection systems equipped with imaging objectives configured in accordance with the present disclosure to be more efficient with reduced lens heating and stray light. It is noted that since the NA at the intermediate image is relatively small, the integration tolerance is relatively loose, allowing the zoom relay and the front objective to be designed and tested independently. Additionally, since the zoom relay is configured to utilize all mirrors configured have minimal scattering, stray light due to scattering may be reduced (which is an additional advantage of the all reflective relay design). Furthermore, since the number of mirrors needed to implement the zoom relay is reduced, the manufacturing cost of imaging objectives configured in accordance with the present disclosure can be reduced significantly as a result (e.g., the cost of low NA spherical mirrors is very low compared to refractive fused silica and calcium fluoride lenses), providing a feature that may be appreciated for various reasons.

It is to be understood that while the examples above referred to wafers as target substrates, such references are merely exemplary and are not meant to be limiting. It is contemplated that imaging objectives and inspection systems equipped with imaging objectives configured in accordance with the present disclosure are applicable to other types of polished plates**.** The term wafer used in the present disclosure may include a thin slice of semiconductor material used in the fabrication of integrated circuits and other devices, as well as other thin polished plates such as magnetic disc substrates, gauge blocks and the like.

It is also understood that the various blocks depicted in the figures are presented separately for illustrative purposes. It is contemplated that while the various blocks depicted in the figures may be implemented as separate (and communicatively coupled) devices and/or processing units, they may also be integrated together.

It is believed that the system and the apparatus of the present disclosure and many of its attendant advantages will be understood by the foregoing description, and it will be apparent that various changes may be made in the form, construction and arrangement of the components. The scope of the invention is defined in the appended claims.

## Claims

1. An imaging objective (108), comprising:
a front objective (130) configured to produce an intermediate image of a portion of a semiconductor wafer disposed on a sample holder, wherein the front objective comprises:
a lens with a plano side serving as a reflecting surface (130A);
a meniscus lens (130B};
a concave mirror (130C); and
a series of refractive fused silica and calcium fluoride lenses; and
a relay (132) configured to receive the intermediate image produced by the front objective, the relay comprising three spherical mirrors (132A, 132B, 132C) positioned to deliver a projection of the intermediate image to a fixed image plane;
wherein the three spherical mirrors have different curvatures with respect to one another;
wherein the three spherical mirrors are moveable axially and vertically while still maintaining the projection of the intermediate image to the fixed image plane;
wherein the numerical aperture of the intermediate image at the interface is 0.2 or less; and
at least one additional relay configured to receive the intermediate image produced by the front objective, the at least one additional relay comprising three spherical mirrors positioned to deliver a second projection of the intermediate image to the fixed image plane, wherein the at least one additional relay has a zoom range different from a zoom range of the first mentioned relay.

2. The imaging objective of claim 1, wherein the three spherical mirrors:
are all reflective mirrors with substantially no obscuration; or
are moveable at least axially or vertically while still maintaining the projection of the intermediate image to the fixed image plane.

3. The imaging objective of claim 1, wherein the front objective is further configured to magnify the intermediate image to reduce a numerical aperture of the intermediate image at an interface between the front objective and the relay.

4. The imaging objective of claim 1, wherein the intermediate image produced by the front objective is telecentric.

5. An inspection system (100), comprising:
a detector (110) positioned at a fixed location within the inspection system;
the imaging objective (108) of claim 1, wherein the relay is positioned to deliver a projection of the intermediate image to the detector positioned at the fixed location.

6. The inspection system of claim 5, wherein the three spherical mirrors (132A, 132B, 132C):
are all reflective mirrors with substantially no obscuration; or
are moveable at least axially or vertically while still maintaining the projection of the intermediate image to the detector.

7. The inspection system of claim 5, wherein the front objective is further configured to magnify the intermediate image to reduce a numerical aperture of the intermediate image at an interface between the front objective and the relay.

8. The inspection system of claim 5, wherein the intermediate image produced by the front objective is telecentric.

9. The inspection system of claim 5, wherein the detector is a time delay integration (TDI) detector.

## Patentansprüche

1. Abbildungsobjektiv (108), umfassend:
ein Frontobjektiv (130), das so konfiguriert ist, dass es ein Zwischenbild eines Teils eines auf einem Probenhalter angeordneten Halbleiterwafers erzeugt, wobei das Frontobjektiv umfasst:
eine Linse mit einer Planseite, die als reflektierende Oberfläche (130A) dient;
eine Meniskuslinse (130B);
einen Hohlspiegel (130C); und
eine Reihe von brechenden Linsen aus Quarzglas und Calciumfluorid; und
ein Relais (132), das so konfiguriert ist, dass es das vom Frontobjektiv erzeugte Zwischenbild empfängt, wobei das Relais drei sphärische Spiegel (132A, 132B, 132C) umfasst, die so positioniert sind, dass sie eine Projektion des Zwischenbilds auf eine feste Bildebene liefern;
wobei die drei sphärischen Spiegel in Bezug aufeinander unterschiedliche Krümmungen aufweisen;
wobei die drei sphärischen Spiegel axial und vertikal beweglich sind, während die Projektion des Zwischenbilds auf die feste Bildebene beibehalten wird;
wobei die numerische Apertur des Zwischenbilds an der Schnittstelle 0,2 oder weniger beträgt; und
wenigstens ein zusätzliches Relais, das so konfiguriert ist, dass es das vom Frontobjektiv erzeugte Zwischenbild empfängt, wobei das wenigstens eine zusätzliche Relais drei sphärische Spiegel umfasst, die so positioniert sind, dass sie eine zweite Projektion des Zwischenbilds auf die feste Bildebene liefern, wobei das wenigstens eine zusätzliche Relais einen Zoombereich aufweist, der sich von einem Zoombereich des erstgenannten Relais unterscheidet.

2. Abbildungsobjektiv nach Anspruch 1, wobei die drei sphärischen Spiegel:
alle reflektierende Spiegel mit im Wesentlichen keiner Abschattung sind; oder
wenigstens axial oder vertikal beweglich sind, während die Projektion des Zwischenbilds auf die feste Bildebene beibehalten wird.

3. Abbildungsobjektiv nach Anspruch 1, wobei das Frontobjektiv ferner so konfiguriert ist, dass es das Zwischenbild vergrößert, um eine numerische Apertur des Zwischenbilds an einer Schnittstelle zwischen dem Frontobjektiv und dem Relais zu reduzieren.

4. Abbildungsobjektiv nach Anspruch 1, wobei das vom Frontobjektiv erzeugte Zwischenbild telezentrisch ist.

5. Inspektionssystem (100), umfassend:
einen Detektor (110), der an einem festen Ort innerhalb des Inspektionssystems positioniert ist;
das Abbildungsobjektiv (108) nach Anspruch 1, wobei das Relais so positioniert ist, dass es eine Projektion des Zwischenbilds an den an dem festen Ort positionierten Detektor liefert.

6. Inspektionssystem nach Anspruch 5, wobei die drei sphärischen Spiegel (132A, 132B, 132C):
alle reflektierende Spiegel mit im Wesentlichen keiner Abschattung sind; oder
wenigstens axial oder vertikal beweglich sind, während die Projektion des Zwischenbilds auf den Detektor beibehalten wird.

7. Inspektionssystem nach Anspruch 5, wobei das Frontobjektiv ferner so konfiguriert ist, dass es das Zwischenbild vergrößert, um eine numerische Apertur des Zwischenbilds an einer Schnittstelle zwischen dem Frontobjektiv und dem Relais zu reduzieren.

8. Inspektionssystem nach Anspruch 5, wobei das vom Frontobjektiv erzeugte Zwischenbild telezentrisch ist.

9. Inspektionssystem nach Anspruch 5, wobei der Detektor ein Time-Delay-Integration-(TDI-)Detektor ist.

## Revendications

1. Objectif d'imagerie (108), comprenant :
un objectif frontal (130) configuré pour produire une image intermédiaire d'une partie d'une plaquette semi-conductrice disposée sur un porte-échantillon, dans lequel l'objectif frontal comprend :
une lentille munie d'un côté plan servant de surface réfléchissante (130A) ;
une lentille ménisque (130B) ;
un miroir concave (130C) ; et
une série de lentilles réfractives en silice fondue et en fluorure de calcium ; et
un relais (132) configuré pour recevoir l'image intermédiaire produite par l'objectif frontal, le relais comprenant trois miroirs sphériques (132A, 132B, 132C) positionnés pour générer une projection de l'image intermédiaire sur un plan d'image fixe ;
dans lequel les trois miroirs sphériques présentent des courbures différentes les unes par rapport aux autres ;
dans lequel les trois miroirs sphériques sont mobiles axialement et verticalement tout en maintenant la projection de l'image intermédiaire sur le plan d'image fixe ;
dans lequel l'ouverture numérique de l'image intermédiaire au niveau de l'interface est de 0,2 ou moins ; et
au moins un relais supplémentaire configuré pour recevoir l'image intermédiaire produite par l'objectif avant, l'au moins un relais supplémentaire comprenant trois miroirs sphériques positionnés pour générer une seconde projection de l'image intermédiaire sur le plan d'image fixe, dans lequel l'au moins un relais supplémentaire présente une plage de zoom différente d'une plage de zoom du premier relais mentionné.

2. Objectif d'imagerie selon la revendication 1, dans lequel les trois miroirs sphériques :
sont tous des miroirs réfléchissants pratiquement avec sensiblement aucune obstruction ; ou
sont mobiles au moins axialement ou verticalement tout en maintenant la projection de l'image intermédiaire sur le plan d'image fixe.

3. Objectif d'imagerie selon la revendication 1, dans lequel l'objectif avant est également configuré pour agrandir l'image intermédiaire pour réduire une ouverture numérique de l'image intermédiaire au niveau d'une interface entre l'objectif avant et le relais.

4. Objectif d'imagerie selon la revendication 1, dans lequel l'image intermédiaire produite par l'objectif frontal est télécentrique.

5. Système d'inspection (100) comprenant :
un détecteur (110) positionné au niveau d'un emplacement fixe au sein du système d'inspection ;
l'objectif d'imagerie (108) selon la revendication 1, dans lequel le relais est positionné pour générer une projection de l'image intermédiaire au détecteur positionné au niveau de l'emplacement fixe.

6. Système d'inspection selon la revendication 5, dans lequel les trois miroirs sphériques (132A, 132B, 132C) :
sont tous des miroirs réfléchissants pratiquement avec sensiblement aucune obstruction ; ou
sont mobiles au moins axialement ou verticalement tout en maintenant la projection de l'image intermédiaire sur le détecteur.

7. Système d'inspection selon la revendication 5, dans lequel l'objectif avant est également configuré pour agrandir l'image intermédiaire pour réduire une ouverture numérique de l'image intermédiaire au niveau d'une interface entre l'objectif avant et le relais.

8. Système d'inspection selon la revendication 5, dans lequel l'image intermédiaire produite par l'objectif frontal est télécentrique.

9. Système d'inspection selon la revendication 5, dans lequel le détecteur est un détecteur à intégration de retard temporel (TDI).
